# EUROPÄISCHE PATENTSCHRIFT

(11) **EP 1 205 000 B1**
(45) Veröffentlichungstag und Bekanntmachung des Hinweises auf die Patenterteilung: **14.04.2004**
(21) Anmeldenummer: 00947946.0
(22) Anmeldetag: 07.07.2000
(51) Int. Cl.: H01M 8/04, H01M 8/24, H01M 8/02

(54) **KÜHLSYSTEM FÜR BRENNSTOFFZELLEN UND VERFAHREN ZUM BETREIBEN DESSELBEN**
COOLING SYSTEM FOR FUEL CELLS AND METHOD FOR ITS OPERATION
SYSTEME DE REFROIDISSEMENT DE CELLULES A COMBUSTIBLE ET PROCEDE DE SON FONCTIONNEMENT

(30) Priorität: 29.07.1999 DE 19935719
(43) Veröffentlichungstag der Anmeldung: 15.05.2002
(73) Patentinhaber: Forschungszentrum Jülich GmbH, 52425 Jülich (DE)
(72) Erfinder: THOM, Frank, D-52353 Düren (DE)
(74) Vertreter: Gille Hrabal Struck Neidlein Prop Roos
(86) Internationale Anmeldenummer: PCT/EP2000/006450
(87) Internationale Veröffentlichungsnummer: WO 2001/009969

(56) Entgegenhaltungen:
- WO-A-94/13026
- DE-A- 19 853 911
- US-A- 5 338 622
- PATENT ABSTRACTS OF JAPAN vol. 1997, no. 05, 30. Mai 1997 (1997-05-30) & JP 09 007624 A (MITSUBISHI HEAVY IND LTD), 10. Januar 1997 (1997-01-10)
- PATENT ABSTRACTS OF JAPAN vol. 012, no. 108 (E-597), 7. April 1988 (1988-04-07) -& JP 62 237678 A (HITACHI LTD), 17. Oktober 1987 (1987-10-17)

## Beschreibung

Die Erfindung betrifft einen Brennstoffzellenstapel, bei dem mehrere Brennstoffzellen mechanisch und elektrisch miteinander verbunden sind, sowie ein Verfahren zum Betreiben derselben.

Aus der Druckschrift DE 44 30 958 C1 sowie aus der Druckschrift DE 195 31 852 C1 sind Brennstoffzellen bekannt, die eine Kathode, einen Elektrolyten sowie eine Anode aufweisen. In einen an die Kathode angrenzenden Kanal oder Raum wird ein Oxidationsmittel (z. B. Luft) und in einen an die Anode angrenzenden Kanal oder Raum wird Brennstoff (z. B. Wasserstoff) zugeführt.

Der Druckschrift DE 197 90 15 256 A1 ist zu entnehmen, in den vorgenannten Kanälen oder Räumen Verteilerstrukturen vorzusehen. Die Verteilerstrukturen sind kammartig ausgestaltet. Sie sollen eine gleichmäßige Verteilung der Betriebsmittel im jeweiligen Raum bewirken.

Die Betriebsmittel gelangen zu den Elektroden und reichern sich hier ab. Anschließend treten die abgereicherten Betriebsmittel wieder aus und werden aus der Brennstoffzelle herausgeleitet.

An der Kathode der aus der Druckschrift DE 44 30 958 A1 bekannten Hochtemperaturbrennstoffzelle bilden sich in Anwesenheit des Oxidationsmittels Sauerstoffionen. Die Sauerstoffionen passieren den Festelektrolyten und rekombinieren auf der Anodenseite mit dem vom Brennstoff stammenden Wasserstoff zu Wasser. Mit der Rekombination werden Elektronen freigesetzt und so elektrische Energie erzeugt. Betriebstemperaturen einer Hochtemperaturbrennstoffzelle liegen typischerweise um die 800 Grad Celsius.

An der Anode der aus der Druckschrift DE 195 31 852 C1 bekannten Brennstoffzelle bilden sich in Anwesenheit des Brennstoffs mittels eines Katalysators Protonen. Die Protonen passieren die Membran (Elektrolyten) und verbinden sich auf der Kathodenseite mit dem vom Oxidationsmittel stammenden Sauerstoff zu Wasser. An der Anode werden die Elektronen freigesetzt und an der Kathode verbraucht und so elektrische Energie erzeugt.

Zur Erzielung guter Wirkungsgrade müssen die Betriebsmittel räumlich gleichmäßig in einer Brennstoffzelle verteilt werden.

Durchströmen die Betriebsmittel die Brennstoffzelle, so sind Druckverluste zu vermeiden bzw. gering zu halten. Druckverluste haben Leistungsverluste zur Folge.

In einem Elektrodenraum einer Brennstoffzelle (Raum, in dem sich die Elektrode befindet) liegt in der Regel ein Gemisch aus Gasen und/oder Flüssigkeiten vor. Es kann sich um mit Inertgasen verdünnte Brenngase handeln. Durch Reformierung und Oxidation eines Brennstoffs wie einem Methanol-Wasser-Gemisch können im betreffenden Elektrodenraum weitere Inertgase wie Kohlendioxid auftreten. Der Kathode wird regelmäßig Luft und damit auch das Inertgas Stickstoff zugeführt.

Die an den jeweiligen Elektroden befindlichen Gase oder Flüssigkeiten sollten homogen durchmischt vorliegen, um zu guten Leistungen zu gelangen.

Sollen unbefeuchtete Gase, das heißt, nicht getrennt in Befeuchtungseinrichtungen befeuchtete Gase in eine Polymerelektrolytmembran-Brennstoffzelle eingeleitet werden, so sind die Elektrodenflächen besonders gleichmäßig mit Betriebsmitteln zu versorgen. Andernfalls droht verstärkt ein lokales Austrocknen einer Elektrode und gegebenenfalls einer Elektrolytenmembran. Lokales Austrocknen hat Leistungsverluste zur Folge und kann Schäden verursachen. Bei Vorliegen eines Temperaturgradienten kann die Brennstoffzelle lokal überhitzen. Lokales Austrocknen kann die Folge sein.

Strömen Betriebsmittel parallel zu den Elektroden über längere Bereiche hinweg, so verbrauchen sie sich zunehmend. Entsprechend unterscheiden sich die ablaufenden Reaktionen ortsabhängig in quantitativer Hinsicht. Das Auftreten von Temperaturgradienten in einer Brennstoffzelle sind die Folge.

Thermische Gradienten sind generell zu vermeiden, da sich diese schädigend auswirken können und den Wirkungsgrad herabzusetzen, da die Betriebstemperatur zwangsläufig nicht gleichmäßig optimal sein kann.

Es ist gemäß der deutschen Patentanmeldungen mit dem amtlichen Aktenzeichen 198 08 331. 9 - 45 vorgeschlagen worden, zur Lösung vorgenannter Probleme eine Mehrzahl an Zuführungskanälen und hieran angrenzende Abführungskanäle vorzusehen. Diese Kanäle weisen Löcher auf, die an die Elektrode der Brennstoffzelle angrenzen. Die Betriebsmittel durchströmen die Löcher und gelangen so senkrecht zur Elektrode sowie zur Grenzfläche zwischen Elektrolyt und Elektrode. In gleicher Weise strömen dieses senkrecht wieder ab.

Die Löcher sind ferner unterschiedlich groß, um so eine Gleichverteilung der Gase entlang der Elektrodenflächen zu erzielen.

Nachteilhaft ist der beschriebene Aufbau aufgrund der Vielzahl der Kanäle relativ aufwendig. Erwünschte Durchmischungen sind recht gering.

Insbesondere bei Auftreten lokaler, reaktionsbedingter Temperaturgradienten ist die geringe Durchmischung von Nachteil. Ein Temperaturunterschied bewirkt einen geringeren Wirkungsgrad, da die Betriebstemperatur lokal von einem Temperaturoptimum abweicht.

Nachteilhaft hat der Aufbau mit den getrennten Zu - und Abführungskanälen ferner grundsätzlich eine Halbierung der Flächen zur Folge, durch die die Betriebsmittel in die Brennstoffzelle oder einen Stapel von Brennstoffzellen eintreten. Dieser Nachteil kann zwar durch einen höheren Durchsatz ausgeglichen werden. Ein höherer Durchsatz hat jedoch einen höheren Druckverlust und damit einen schlechteren Wirkungsgrad zur Folge.

Vergleichbares gilt für die Flächen, durch die die abgereicherten Betriebsmittel aus der Brennstoffzelle oder dem Brennstoffzellenstapel austreten.

Zwar können bei einer Brennstoffzelle die Stege zwischen getrennten Zu - und Abführungskanälen sehr klein gehalten werden, um so zu großen Eintritts - und Austrittsflächen zu gelangen. Hierdurch würde sich jedoch der elektrische Kontakt zwischen den Brennstoffzellen eines Brennstoffzellenstapels und damit der Wirkungsgrad verschlechtern. Ein Brennstoffzellenstapel wird durch mehrere Brennstoffzellen gebildet, die über verbindende Elemente miteinander mechanisch und elektrisch verbunden sind.

Gemäß einer weiteren deutschen Patentanmeldung DE 1985 3911. 8 - 45 ist vorgeschlagen worden, die Elektrode einer Brennstoffzelle von einem an die Elektrodenoberfläche angrenzenden Kanal oder Raum durch eine gelochte Platte zu trennen. Unter einer gelochten Platte wird ein flächiges, mit Löchern versehenes Bauelement verstanden. Diese Platte ist parallel zu den Schichten der Brennstoffzelle (Elektroden - und Elektrolytschichten) angeordnet. Über den angrenzenden Raum oder Kanal wird das entsprechende Betriebsmittel zu - und abgeführt. Die Löcher in der Platte sind makroskopisch groß, also mit bloßem Auge sichtbar.

In Strömungsrichtung des Gases nimmt die Dichte und/oder der Durchmesser der Löcher insbesondere zu. Diese Gleichverteilung hat zur Folge, daß elektrochemische Reaktionen in der Brennstoffzelle gleichmäßig verteilt ablaufen. Dem Entstehen eines Temperaturgradientens kann so entgegengewirkt werden.

Bei dieser Ausgestaltung ist die Gaszuführung zugleich die Gasableitung.

Gase gelangen durch die Löcher zur angrenzenden Elektrode. Die Gase strömen regelmäßig nicht unmittelbar durch ein benachbartes Loch wieder ab. Es treten im Vergleich zu einer Brennstoffzelle mit getrennten Zu- und Abführungskanälen stärkere Durchmischungen (Verwirbelungen) auf. Temperaturgradienten werden so vermieden.

Insbesondere bei Brennstoffzellen, bei denen eine interne Reformierung oder Oxidationsreaktion abläuft, treten Temperaturgradienten auf. Die sehr schnell ablaufende Reformierungsreaktion beschränkt sich in einer Brennstoffzelle regelmäßig lokal auf wenige Millimeter. Die Reaktion ist stark endotherm. Daher sind insbesondere im Fall der internen Reformierung große Durchmischungen zur Steigerung des Wirkungsgrads von Vorteil.

Bei der vorgenannten Ausführungsform werden eine Vielzahl von getrennten Kanälen vermieden. Der konstruktive Aufwand ist somit gering. Es muß lediglich zum Beispiel ein perforiertes Blech zwischen einem verbindenden Element der Brennstoffzelle und der angrenzenden Elektrode vorgesehen werden.

Um Temperaturgradienten in einem Brennstoffzellenstapel zu vermeiden, ist ferner vorgeschlagen worden, eine Brennstoffzelle durch Verdampfen eines flüssigen Kühlmittels zu kühlen. Das Kühlmittel wurde entweder in einem Brennstoffzellenstapel verdampft, oder es wurde einer Kühleinrichtung zugeführt, die extern in Entfernung von dem Brennstoffzellenstapel angeordnet ist.

US-A-5 338 622, WO94/13026 und JP 09 007624 offenbaren die Kühlung von Brennstoffzellen mittels Wärmestrahlung und einer extern vorgesehenen Kühleinrichtung.

Gegenüber dem vorgenannten Stand der Technik ist es Aufgabe der Erfindung, eine Brennstoffzelle bzw. einen Brennstoffzellenstapel bereitzustellen, bei dem die Temperaturverteilung in der Brennstoffzelle weiter verbessert wird. Aufgabe der Erfindung ist ferner die Angabe eines Verfahrens für einen besonders leistungsfähigen Betrieb der anspruchsgemäßen Brennstoffzelle bzw. des anspruchsgemäßen Brennstoffzellenstapel.

Die Aufgabe der Erfindung wird durch eine Vorrichtung sowie ein Verfahren mit den Merkmalen der Hauptansprüche gelöst. Vorteilhafte Ausgestaltungen ergeben sich aus den Unteransprüchen.

Anspruchsgemäß wird die Aufgabe durch einen Brennstoffzellstapel gelöst, der extern und benachbart Kühleinrichtungen aufweist, durch die ein Kühlmittel strömt. Die Kühleinrichtung ist so nahe angeordnet und beschaffen, daß die Wärme von dem Brennstoffzellenstapel überwiegend durch Wärmestrahlung von dem Brennstoffzellenstapel auf die Kühlleitungen und das Kühlmittel übertragen und so die Kühlung der Brennstoffzelle bewirkt wird. Die Kühlung ist so zu steuern, daß das Kühlmittel aufgrund der zugeführten Wärme verdampft.

Im Vergleich zum Stand der Technik mit der externen oder internen Kühlung durch Verdampfung ist der anspruchsgemäße Aufbau einfach und preiswert. Bei der vorgenannten Betriebsweise (Kühlung durch Verdampfung) findet eine gleichmäßige Kühlung statt, da die Temperatur des Kühlmittels konstant bleibt.

Unter extern angeordneter Kühleinrichtung wird eine solche verstanden, die nicht in den Brennstoffzellenstapel integriert ist. Als externe Form der Kühlung wird anstelle einer Kühlung durch endotherme chemische Reaktionen (z. B. Methan - Reformierungsreaktion in einem externen Plattenwärmetauscher nach DE 19716438 A 1) eine Verdampfungskühlung bevorzugt. Unter Verdampfungskühlung ist eine solche zu verstehen, bei der ein Medium unter Wärmeaufnahme verdampft wird.

Als verdampfendes Medium wird vorzugsweise Wasser verwendet.

Beruht die externe Kühlwirkung auf sich erwärmenden Medien (Gase, Flüssigkeiten), die keinen Phasenwechsel durchlaufen, so treten Temperaturgradienten in der Brennstoffzelle bzw. im Brennstoffzellenstapel verstärkt auf. Steigt nämlich die Temperatur des kühlen Kühlmittels an, so variiert dementsprechend die Kühlwirkung. Entsprechend treten Temperaturgradienten in der Brennstoffzelle bzw. im Brennstoffzellenstapel auf.

Dieser unerwünschte Effekt wird verhindert, indem durch Verdampfung gekühlt wird. Das Kühlmittel verändert dann seine Temperatur praktisch nicht. Dementsprechend bleibt die Kühlleistung konstant. Temperaturgradienten in der Brennstoffzelle oder im Brennstoffzellenstapel werden so herabgesetzt.

Die vorgenannte Vorrichtung wird insbesondere so betrieben, daß die von der Brennstoffzelle durch Wärmestrahlung abgegebene Wärmemenge wenigstens zu 80 Prozent, vorzugsweise wenigstens zu 90 Prozent für das Verdampfen des Kühlmittels aufgewendet wird. Diese Form der Wärmeübertragung ist einfach und preiswert im Vergleich zur Wärmeübertragung gemäß dem Stand der Technik, bei dem ein Kühlmittel von der Brennstoffzelle zu einem externen Verdampfer transportiert wird.

Der Betrieb der Brennstoffzelle soll insbesondere so erfolgen, daß eine vorhergehende Erwärmung auf Siedetemperatur des Kühlmediums bzw. eine Überhitzung der verdampfenden Flüssigkeit (verdampfendes Kühlmittel) nicht erfolgt.

In einer vorteilhaften Ausgestaltung der Erfindung sind der Brennstoffzellenstapel und die Kühleinrichtung in einem Behälter angeordnet. Auf diese Weise wird ein geschlossenes System bereitgestellt, welches vor äußeren störenden Einflüssen geschützt ist. Der Betrieb der Vorrichtung wird so im besonderen Maße sichergestellt.

In einer weiteren vorteilhaften Ausgestaltung der Erfindung sind als Verdampfer dienende Rohre zusammen mit einem Brennstoffzellenstapel in einem Behälter oder Gehäuse angeordnet. Durch die Rohre strömt ein Kühlmittel. Die Rohre sind so angeordnet, daß diese vom Brennstoff umströmt werden, der in die Brennstoffzelle bzw. in den Brennstoffzellenstapel eintritt und/ oder wieder heraustritt.

Kühleinrichtungen können horizontal und/oder vertikal in einem oder in mehreren der Gaszufuhrräume angeordnet sein. Unter Gaszufuhrraum wird dabei ein benachbart zur Brennstoffzelle bzw. zum Brennstoffzellenstapel angeordneter Raum verstanden, über den Betriebsmittel zugeleitet werden. Bei den Kühleinrichtungen handelt es sich vorzugsweise um Rohre. Als Kühlmittel wird vorzugsweise verdampfendes Wasser verwendet, dessen thermodynamischer Zustand durch das Naßdampfgebiet gekennzeichnet ist. Eine Vorwärmung auf Siedetemperatur bzw. Überhitzung des Kühlmittels, also z. B. des Wassers, soll nicht erfolgen, da hierdurch in vermeidbarer Weise Energie aufgewendet werden müßte.

Vorteilhaft werden die Kühleinrichtungen, die insbesondere als Verdampfer ausgestaltet sind, an den Längsseiten eines Brennstoffzellenstapels mit rechteckförmigem Grundriß plaziert, da hier die größte Oberfläche zur Verfügung steht. Die Wärmeübertragung ist dann besonders groß. An diesen Längsseiten treten Betriebsmittel in den Brennstoffzellenstapel ein und/oder wieder aus, so daß diese Kühleinrichtungen zumindest teilweise umströmt werden. Die Kühleinrichtungen, also z. B. Rohre, sind insbesondere aus Metall gefertigt.

Die Aufgabe wird ferner dadurch gelöst, daß eine Brennstoffzellenelektrode von einem an die Oberfläche der Elektrode angrenzenden Kanal oder Raum durch eine gelochte Platte getrennt ist. Eine gelochte Platte ist ein flächiges, mit Löchern versehenes Element. Sie ist parallel zu den Schichten der Brennstoffzelle (Elektroden - und Elektrolytschichten) angeordnet. Über den angrenzenden Raum oder Kanal wird das entsprechende Betriebsmittel zu - und abgeführt. Die Löcher bzw. Öffnungen in der Platte sind makroskopisch groß, also mit bloßem Auge sichtbar.

Löcher in der Platte, die von einer Mittellinie der Platte aus gesehen am Rande angeordnet sind, sind dichter angeordnet und/ oder größer als die Löcher, die sich nahe oder bei der Mittellinie befinden. Die gelochte Platte grenzt so an einen Anodenraum an, daß die Strömungsrichtung des Brennstoffs parallel zur Mittellinie verläuft.

Durch die größeren Öffnungen in der gelochten Platte gelangt mehr Betriebsmittel in den angrenzenden Anodenraum als durch die kleineren Öffnungen. Betriebsmittel werden im Anodenraum elektrochemisch umgesetzt. Dabei entsteht Wärme. Je mehr Betriebsmittel umgesetzt wird, desto größer ist die entstehende Wärmemenge. Folglich wird bei Vorsehen der anspruchsgemäßen gelochten Platte im Inneren eines Anodenraums weniger Wärme erzeugt als am Rand, bei dem aufgrund der größeren Löcher ein Betriebsmittel in größerer Menge in den Anodenraum eintreten kann. Dieser Rand des Anodenraums befindet sich in der Nähe der Mantelfläche einer Brennstoffzelle oder eines Brennstoffzellenstapels. Die Mantelfläche einer Brennstoffzelle oder eines Brennstoffzellenstapels wird durch eine kühlere Umgebung stärker gekühlt als das Innere der Brennstoffzelle oder des Brennstoffzellenstapels. Ein Temperaturgradient in einer Brennstoffzelle oder in einem Brennstoffzellenstapel wird dadurch vermieden, daß ein größerer exothermer elektrochemischer Umsatz des Brennstoffs in der Nähe der Mantelfläche im Vergleich zu einem exothermen elektrochemischen Umsatz im Inneren der Brennstoffzelle oder des Brennstoffzellenstapels herbeigeführt wird.

Gase gelangen ferner durch die Löcher zur angrenzenden Elektrode. Die Gase strömen regelmäßig nicht unmittelbar durch ein benachbartes Loch wieder ab. Es treten im Vergleich zu einer Brennstoffzelle mit getrennten Zu - und Abführungskanälen größere Durchmischungen (Verwirbelungen) auf. Temperaturgradienten werden so weiter vermieden.

Der konstruktive Aufwand ist gering. Es muß lediglich zum Beispiel ein perforiertes Blech zwischen einem verbindenden Element einer Brennstoffzelle und der angrenzenden Elektrode vorgesehen werden.

Die Öffnungen bzw. Löcher in der gelochten Platte konnen beliebig geformt sein. Es kommt lediglich darauf an, daß die Durchtrittsfläche im vorgenannten Randbereich größer ist als die Durchtrittsfläche bei oder nahe bei der vorgenannten Mittellinie. Unter Durchtrittsfläche ist die Fläche zu verstehen, durch die ein Betriebsmittel durch die gelochte Platte hindurchströmt. Sie stellt also eine Summe von Flächen der Löcher in der anspruchsgemäßen Platte dar.

In einer vorteilhaften Ausgestaltung der Erfindung sind die Löcher in der gelochten Platte symmetrisch zur Mittellinie angeordnet. Es ergibt sich so eine symmetrische Verteilung, die für die Vermeidung von Temperaturgradienten von Vorteil ist.

Die Durchtrittsfläche beim Randbereich sollte wenigstens 5% vorteilhafter wenigstens 20% größer sein als die Durchtrittsfläche in der Nähe der Mittellinie.

In einer weiteren vorteilhaften Ausgestaltung der Erfindung nimmt die Durchtrittsfläche, durch die ein Betriebsmittel durch die gelochte Platte hindurchströmt, in Strömungsrichtung um wenigstens 10%, vorzugsweise um wenigstens 100 Prozent zu. Eine solche Zunahme in Strömungsrichtung wird in der deutschen Patentanmeldung mit den amtlichen Aktenzeichen 198 53 911. 8 - 45 beschrieben. Durch dieses vorsehen der zunehmenden Durchtrittsfläche wird zusätzlich zu den vorgenannten Wirkungen erreicht, daß nicht bereits im Eingangsbereich ein Betriebsmittel vollständig in den entsprechenden Elektrodenraum eintritt. Somit konzentrieren sich die ablaufenden chemische Reaktionen nicht auf den Eingangsbereich. Auf diese Weise wird die Vermeidung von Temperaturgradienten weiter gefördert.

Die gelochte Platte besteht vorzugsweise aus einem hochlegierten, warmfesten Stahl (Beispiel:X8 CrNiMoNb 16 16) oder einer elektrisch leitfähigen Keramik (Beispiel: La(Sr, Ca)CrO₃). Solche Materialien eignen sich insbesondere für den Einsatz in einer Hochtemperaturbrennstoffzelle, da sie warmfest und korrosionsbeständig sind.

In einer weiteren vorteilhaften Ausgestaltung der Erfindung bildet ein gelochtes Blech die anspruchsgemäße Platte, welches an das verbindende Element (bekannt unter der Bezeichnung: bipolare Platte oder Interkonnektor) in einem Brennstoffzellenstapel geschweißt ist.

Im Inneren des Brennstoffzellenstapels werden die Anodenräume der einzelnen Brennstoffzellen mit den gelochten Platten in vorgenannter weise versehen.

Die gelochten Platten bestehen insbesondere aus Metall.

Die Wirkungen der gelochten Platte in einem Brennstoffzellenstapel werden unabhängig von der Verdampfungskühlung erreicht.

Durch Optimierung der folgenden Parameter kann die Betriebstemperatur annähernd konstant gehalten werden:
1. Abstand der Verdampferrohre vom Brennstoffzellenstapel
2. Zahl der Verdampferrohre
3. Längen-Breitenverhältnis des Grundrisses eines Brennstoffzellenstapels
4. Dimensionierung der Durchtrittsflächen bei der Lochplatte.

Es kann dem Fachmann überlassen bleiben, durch wenige Versuche die optimalen Parameter zu ermitteln.

Nachfolgend wird die Erfindung anhand der Figuren näher erläutert.
- Fig. 1: zeigt einen horizontalen Schnitt durch eine Brennstoffzelleneinheit
- Fig. 2: zeigt eine gelochte Platte in Aufsicht mit symmetrisch angeordneten Öffnungen.

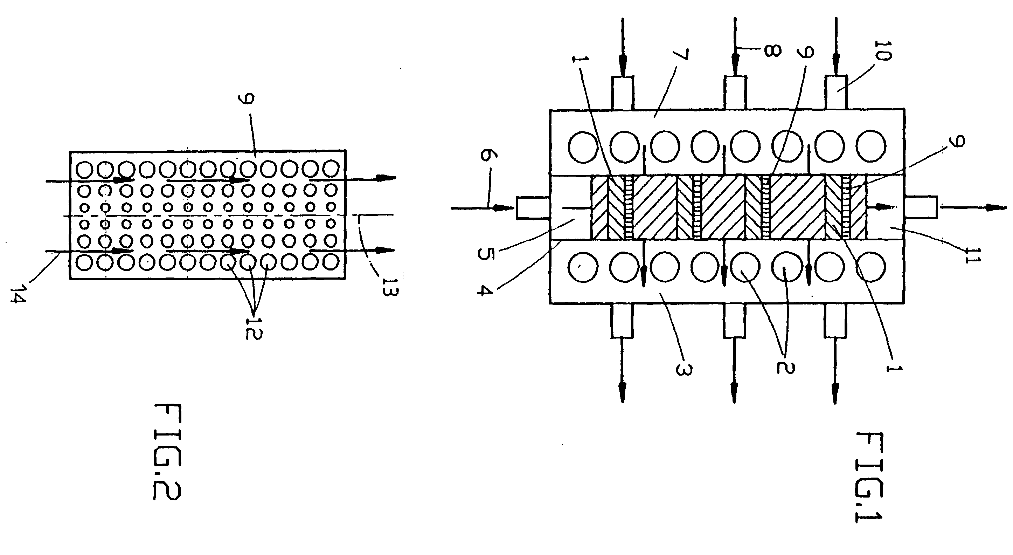

Fig. 1 zeigt im Schnitt einen Brennstoffzellenstapel, der aus mehreren Brennstoffzellen 1 besteht. Die Brennstoffzellen sind über verbindende Elemente miteinander elektrisch und mechanisch gekoppelt. An die Längsseiten des Brennstoffzellenstapels grenzen Rohre 2 an. Die Rohre 2 sind im Querschnitt zu sehen. Durch diese werden Kühlmittel hindurchgeleitet. Die Rohre sind in einem Abgasraum 3 sowie in einem Anodengaszufuhrraum 7 angeordnet. Trennwände 4 dichten den Anodengaszufuhrraum 7, den Kathodengaszufuhrraum 5, den Anodengasabfuhrraum 3 sowie den Kathodengasabfuhrraum 11 gasdicht voneinander ab. Die anodenseitigen Betriebsmittel 8 und die kathodenseitigen Betriebsmittel 6 werden kreuzförmig zueinander geführt und gelangen über Leitungen 10 in die Zufuhrräume bzw. aus den Abfuhrräumen. Die Rohre 2 werden vorzugsweise in dem Anodengaszufuhrraum angeordnet, da bei eventuellen Leckagen der Rohre der dann austretende Wasserdampf anodenseitig elektrochemisch unbedenklich ist. Voraussetzung hierfür ist, daß Wasser als Kühlmittel eingesetzt wird. Der Brennstoff 8 passiert zunächst eine gelochte Platte 9, bevor er zur Anode gelangt. Eine Ausführungsform der gelochten Platte wird in Fig. 2 verdeutlicht. Links und rechts (seitlich) von einer Mittellinie 13 sind Löcher 12 symmetrisch angeordnet. Mit zunehmendem Abstand zur Mittellinie nimmt der Durchmesser der Löcher 12 zu. Pfeile 14 deuten die Strömungsrichtung des Anodengases an.

## Patentansprüche

1. Vorrichtung mit einem Brennstoffzellenstapel (1) und einer extern so angeordneten Kühlungseinrichtung, dass der Brennstoffzellenstapel extern durch Verdampfen eines Kühlmittels in der benachbart angeordneten Kühlungseinrichtung gekühlt wird,
wobei die Wärme von den Brennstoffzellen überwiegend per Wärmestrahlung auf die Kühlungseinrichtung übertragen wird,
**dadurch gekennzeichnet, dass**
die Kühlungseinrichtung derart ist, dass sie die Temperatur des Kühlmittels aufgrund der gesteuerten Kühlung durch Verdampfung konstant zu halten vermag.

2. Vorrichtung nach Anspruch 1, bei der die Kühleinrichtung durch Rohre (2) gebildet wird, wobei die Rohre in einem Zuführraum (7) oder einem Abführraum (3) für Brennstoff angeordnet sind.

3. Vorrichtung nach einem der vorhergehenden Ansprüche, bei der die externe Kühleinrichtung zusammen mit dem Brennstoffzellenstapel in einem Gehäuse angeordnet ist.

4. Vorrichtung nach einem der vorhergehenden Ansprüche, bei der eine Elektrode einer Brennstoffzelle von einem angrenzenden Kanal oder Raum für die Zuführung eines Betriebsmittel durch eine gelochte Platte (9) getrennt ist, wobei die Größe und/ oder Dichte der Löcher von einer Mittellinie (13) aus zum Rand zunimmt und die Mittellinie parallel zur Strömungsrichtung (14) des Betriebsmittels verläuft.

5. Vorrichtung noch einem der vorhergehenden Ansprüche, bei der die Größe und/oder Dichte der Löcher am Rand wenigstens um 5%, vorzugsweise um 20% die Größe und/oder Dichte der Löcher nahe bei der Mittellinie übersteigt.

6. Verfahren zum Betreiben einer Vorrichtung mit einem Brennstoffzellenstapel (1) und einer extern angeordneten Kühlungseinrichtung, bei der der Brennstoffzellenstapel extern durch Verdampfen eines Kühlmittels in der benachbart angeordneten Kühleinrichtung gekühlt wird, wobei die Wärme von den Brennstoffzellen zur Kühleinrichtung überwiegend durch Wärmestrahlung übertragen wird,
**dadurch gekennzeichnet, dass**
die Temperatur des Kühlmittels aufgrund der gesteuerten Kühlung durch Verdampfung konstant bleibt.

## Claims

1. Cooling system comprising a stack of fuel cells (1) and a cooling device externally provided thereof in such a manner that said stack of fuel cells is cooled from the outside by vaporizing a cooling medium contained in the neighbouring cooling system,
wherein the heat emitted by the fuel cells is substantially transferred through thermal radiation to the cooling system,
**characterized in that**
said cooling system is configured such that on the basis of controlled cooling due to vaporization the temperature of the cooling medium may be maintained constant.

2. Cooling system according to claim 1,
**characterized in that**
the cooling system consists of tubes (2), and that said tubes are located in a fuel inlet chamber (7) or a fuel outlet chamber (3).

3. Cooling system according to one of the preceding claims,
**characterized in that**
the external cooling system is located in a casing together with the stack of fuel cells.

4. Cooling system according to one of the preceding claims in which an electrode of a fuel cell is separated by means of a perforated plate (9) from a neighbouring channel or chamber for the introduction of an operating medium, wherein the size and/or density of the perforations is increased between a medium line (13) and a border, and in that said medium line is arranged parallel to the direction of flow (14) of the operation medium.

5. Cooling system according to one of the preceding claims,
**characterized in that**
the size and/or density of the perforations provided at the border exceeds by at least 5 %, and preferably by 20 % the size and/or density of the perforations located near the mediume line.

6. Method for the operation of a cooling system comprising a stack of fuel cells (1) and a cooling device externally provided thereof, wherein said stack of fuel cells is cooled from the outside thereof by vaporizing a cooling medium contained in the neighbouring cooling system, wherein the heat emitted by the fuel cells is substantially transmitted through thermal radiation to the cooling system,
**characterized in that**
due to controlled cooling by means of vaporization the temperature of the cooling medium may be maintained constant.

## Revendications

1. Système de refroidissement comprenant une pile de cellules à combustible et un dispositif de refroidissement externe disposé de telle sorte que ladite pile de cellules à combustible est refroidie à partir de l'extérieur par la vaporisation d'un produit de refroidissement contenu dans le système de refroidissement voisin,
dans lequel la chaleur émise par les cellules de combustible est essentiellement transmise par radiation thermique,
**caractérisé en ce que**
ce système de refroidissement est conçu de telle sorte que sur la base d'un refroidissement contrôlé il est capable de maintenir la température du moyen de refroidissement constante.

2. Sytème de refroidissement suivant la revendication 1,
**caractérisé en ce que**
ledit système de refroidissement est formé par des tubes (2), et **en ce que** ces tubes sont disposés dans une chambre d'entrée du combustible (7) ou une chambre de sortie du combustible (3).

3. Système de refroidissement suivant l'une des revendications précédentes,
**caractérisé en ce que**
ce syteme de refroidissement externe est disposé avec la pile de cellules de combustible dans un casier correspondant.

4. Système de refroidissement suivant Lune des revendications précédentes,
**caractérisé en ce que**
l'une des électrodes d'une cellule de combustible est séparée au moyen d'une plaque perforée (9) d'un canal ou d'une chambre voisine pour l'introduction d'un combustible, et **en ce que** la dimension et/ou la densité des perforations augmentent entre une ligne médiane (13) et un bord, et **en ce que** ladite ligne médiane est disposée parallèlement par rapport à la direction du flux (14) du combustible.

5. Système de refroidissement suivant l'une des revendications précédentes,
**caractérisé en ce que**
la dimension et/ou la densité des perforations du bord excèdent d'au moyen 5 %, et de préférence de 20 %, la valeur de la dimension et/ou de la densité des perforations au voisinage de la ligne médiane.

6. Procédé de fonctionnement d'un système de refroidiessement comprenant une pile de cellules de combustible (1) et un dispositif de refroidissement externe, dans lequel ladite pile de cellules de combustible est refroidie par la vaporisation d'un moyen de refroidissement prévu dans le système de refroidissement voisin, et en ce que la chaleur émise par les cellules de combustible est essentiellement transmise par radiation thermique,
**caractérisè en ce que**
par vaporisation la température du moyen de refroidissement peut être maintenue constante sur la base du refroidissement contrôlé.
